## Europäisches Patentamt
## European Patent Office
## Office européen des brevets

(19)

(11) Veröffentlichungsnummer: **0 208 872**
**B1**

(12) **EUROPÄISCHE PATENTSCHRIFT**

(45) Veröffentlichungstag der Patentschrift: **05.09.90**

(51) Int. Cl.⁵: **H 04 B 1/66, H 04 L 27/18**

(21) Anmeldenummer: **86106762.7**

(22) Anmeldetag: **17.05.86**

(54) **Verfahren zur Übertragung digitaler Daten.**

(30) Priorität: **15.07.85 CH 3068/85**

(43) Veröffentlichungstag der Anmeldung:
**21.01.87 Patentblatt 87/04**

(45) Bekanntmachung des Hinweises auf die
Patenterteilung:
**05.09.90 Patentblatt 90/36**

(84) Benannte Vertragsstaaten:
**CH DE GB IT LI**

(56) Entgegenhaltungen:
**DE-A-3 230 726**
**US-A-3 736 507**
**US-A-3 962 637**
**US-A-4 066 964**

**ARCHIV FÜR ELEKTRONIK UND ÜBERTRAGUNGSTECHNIK, Band 33, Nr. 7/8, Juli/August 1979, Seiten 269-277, Stuttgart, DE; J. KREBSER: "Übertragungsverhalten von FH-DPSK-Systemen bei frequenzselektivem Signalschwund und Teilbandstörungen"**

(73) Patentinhaber: **BBC Brown Boveri AG**
**Haselstrasse**
**CH-5401 Baden (CH)**

(72) Erfinder: **Braun, Walter, Dr.**
**Zentralstr. 137**
**CH-5430 Wettingen (CH)**
Erfinder: **Dzung, Dacfey, Dr.**
**Sternenstr. 16**
**CH-5415 Nussbaumen (CH)**
Erfinder: **Hagmann, Walter, Dr.**
**Pilgerstr. 22**
**CH-5405 Dättwil-Baden (CH)**

(56) Entgegenhaltungen:
**IEEE TRANSACTIONS ON INFORMATION THEORY, Band IT-29, Nr. 4, Juli 1983, Seiten 543-551, IEEE, New York, US; A.J. VITERBI et al.: "Nonlinear estimation of PSK-modulated carrier phase with application to burst digital transmission"**

Anmerkung: Innnerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# EP 0 208 872 B1

**Beschreibung**

Die Erfindung betrifft ein Verfahren zur Uebertragung digitaler Daten gemäss dem Oberbegriff des Anspruchs 1.

Ein solches Verfahren ist beispielsweise bakannt aus einem Artikel von Marvin K. Simon, und Andrea Polydoros mit dem Titel "Coherent Detection of Frequency-Hopped Quadrature Modulations in the Presence of Jamming — Part I: QPSK and QASK Modulations", veröffentlicht in IEEE Transactions On Communication, Vol. COM-29, No. 11, Nov. 1981, Seiten 1644 und folgende.

Als Modulationsverfahren wird in dem genannten Artikel das sogenannte "Phase Shift Keying" (abgekürzt PSK) verwendet. Dieses ist ein beispielsweise im Vergleich zum sogenannten "Frequency Shift Keying" (abgekürzt FSK) energetisch sehr günstiges Modulationsverfahren, welches jedoch als kohärentes Verfahren jeweils die exakte Kenntnis der Phase der Trägerwelle bei der Detektion der übertragenen Daten im Empfänger erfordert. Durch die — um schmalbandigen Störern im Uebertragungsweg auszuweichen — fortlaufende sprunghafte Veränderung der Frequenz der Trägerwelle, in der Nachrichtentechnik auch mit "Frequency Hopping" (abgekürzt FH) bezeichnet, kann aber die Phasenkohärenz verloren gehen. Es muss deshalb die Phase der Trägerwelle in der Regel in jedem Uebertragungsabschnitt zwischen jeweils zwei Frequenzsprügen neu bestimmt werden. In dem genannten Artikel wird diese Phasenbestimmung als schwieriges Problem bezeichnet. Grundsätzlich könnte dieses Problem durch Uebertragung einer besonderen Synchronisationsinformation, z.B. in einer Präambel, zusätzlich zu den Daten im jedem Uebertragungsabschnitt gelöst werden. Diese Lösung ist jedoch sehr aufwendig und daher wenig praktikabel. Aus dem Artikel "Uebertragungsverhalten von FH—DPSK—Systemen bei frequenzselektivem Signalschwund und Teilbandstörungen" von J. Krebser, Archiv für Elektronik und Uebertragungsstechnik, Bd. 33, Nr. 7/8, Juli/August 1979, S.269—277, ist ein FH—DPSK—Verfahren bekannt, bei welchem die Phasenkohärenz über die Frequenzsprünge hinweg durch inkohärente digitale Basisbandmodulation sowie durch einen zusätzlichen Refenrenzimpuls gewährleistet ist. Zur Verbesserung der Störsicherheit wird ausserdem eine Mehrfachübertragung der Daten eingesetzt.

Die Erfindung, wie sie in den Ansprüchen gekennzeichnet ist, löst die Aufgabe, bei einem Verfahren der eingangs genannten Art Verfahrensschritte anzugeben, durch welche eine einfache, insbesondere energetisch günstige und dennoch sichere Bestimmung der relativen Phasenbeziehung der verschiedenen Uebertragungsabschnitte ermöglicht wird.

Die durch die Erfindung erreichten Vorteile sind im wesentlichen darin zu sehen, dass das "Frequency Hopping" nunmehr problemlos in Verbindung mit dem "Phase Shift Keying" angewendet werden kann. Insbesondere ist der zur Durchführung des erfindungsgemässen Verfahrens erforderliche unvermeidbare zusätzliche Aufwand an Energie so gering, dass der durch das "Phase Shift Keying" gegenüber anderen Modulationsverfahren, wie dem genannten "Frequency Shift Keying", gewonnene Energievorteil weitgehend erhalten bleibt. Ein weiterer Vorteil des erfindungsgemässen Verfahrens kann darin gesehen werden, dass die Blockphasen direkt aus den Abschnitten der Trägerwellen bestimmt werden, welche mit den jeweiligen Daten moduliert sind. Eine zusätzlich zu den Daten übertragene Synchronisationsinformation, z.B. in einer Präambel, ist nicht erforderlich.

Im folgenden wird das erfindungsgemässe Verfahren unter Bezugnahme auf die Zeichnung näher erläutert.

Es zeigt:

Fig. 1 in einem Frequenz-Zeitdiagram in schematischer Weise die Uebertragung von sechs Symbolen in vier Uebertragungsabschnitten mit unterscheidlichen Frequenzen,

Fig. 2 a) und b) jeweils ein Zeigerdiagramm zur Erläuterung eines Schätzverfahrens zur vorläufigen Bestimmung der Blockphasen bis auf die n-fache Phasenunsicherheit und

Fig. 3 ein Flussdiagramm zur Erläuterung eines Auswertverfahrens zur Gewinnung der endgültigen Blockphasen.

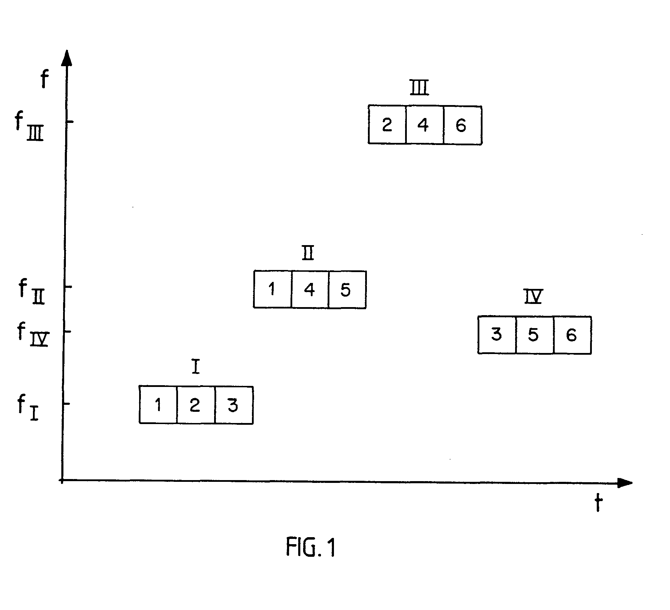

In Fig. 1 ist in einem Frequenz-Zeitdiagramm, dessen Achsen mit f und t bezeichnet sind, in schematischer Weise dargestellt, wie nach der Erfindung sechs Symbole 1 bis 6 beispielsweise in vier Uebertragungsabschnitten I bis IV übertragen werden können. Die Symbole 1 bis 6 sollen dabei durch Modulation der Phase einer Trägerwelle um einen der Phasenwinkel aus der Menge $[0, 2\pi/n, \dots, (n-1)2\pi/n]$ mit n Elementen in einem Sender gebildet worden sein. Ein Modulationsverfahren mit n = 2 bezeichnet man als "Binary Phase Shift Keying" (abgekürzt "BPSK"), ein Modulationsverfahren mit n = 4 als "Quadriphase Shift Keying" (abgekürzt "QPSK").

Die vier Uebertragungsabschnitte sind in Fig. 1 in vertikaler Richtung gegeneinander versetzt gezeichnet, um zu verdeutlichen, dass die Trägerwelle in den einzelnen Uebertragungsabschnitten I bis IV verschiedene, beispielsweise die mit $f_I$ bis $f_{IV}$ bezeichneten Frequenzen aufweisen soll.

Pro Uebertragungsabschnitt werden in Fig. 1 drei Symbole übertragen. Wie zu erkennen ist, werden sämtliche Symbole 1 bis 6 zweifach übertragen und zwar so, dass niemals zwei gleiche Symbole im gleichen Uebertragungsabschnitt vorkommen, darüber hinaus auch nicht zwei Symbole aus einem Uebertragungsabschnitt in einem einzigen anderen Uebetragungsabschnitt. Die Mehrfachübertragung aller Symbole ist für den Erfolg des erfindungsgemässen Verfahrens an sich nicht erforderlich. Es wäre grundsätzlich ausreichend, lediglich ein Symbol aus jedem Uebertragungsabschnitt in einem anderen Uebertragungsabschnitt zusätzlich zu übertragen. Durch die Doppelübertragung aller Symbole gewinnt

EP 0 208 872 B1

man jedoch, wie nachstehend noch erläutert werden wird, redundante Information für die Synchronisierung der einzelnen Uebertragungsabschnitte, was besonders im Hinblick auf Uebertragungsfehler durch Störungen im Uebertragungskanal von Vorteil ist.

Um die Symbole 1 bis 6 in einem Empfänger zurückzugewinnen, ist es erforderlich, die Phase, d.h. die Grundphase der ummodulierten Trägerwelle zu kennen. Da die Phasenkohärenz bei den Phasensprüngen zwischen den einzelnen Uebertragungsabschnitten I bis IV verloren gehen kann ist es erforderlich, die Phasenlage der Trägerwelle im Empfänger für jeden Uebertragungsabschnitt I bis IV neu zu bestimmen. Die Phasen der Trägerwelle innerhalb der einzelnen Uebertragungsabschnitte I bis IV werden im folgenden auch als Blockphasen bezeichnet.

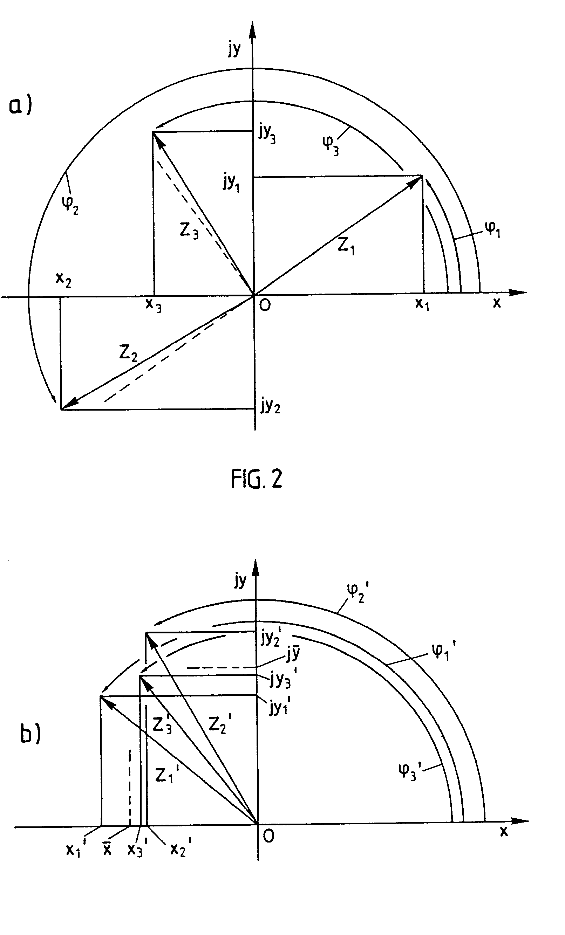

Die Bestimmung der Blockphasen wird mittels eines Schätzverfahrens, wie dem nachstehend Beschriebenen, zunächst bis auf eine noch n-fache Phasenunsicherheit durchgeführt, welches an sich aus einem Artikel von Andrew J. Viterbi und Audrey U. Viterbi mit dem Titel "Nonlinear Estimation of PSK-Modulated Carrier Phase with Application to Burst Digital Transmission", IEEE Transactions On Information Theory, Vol. IT—29, No. 4, July 1983, Seiten 543—551, insbesondere aus Fig. 2 mit zugehöriger Beschreibung bekannt ist und deshalb hier nicht ausführlich beschriebene zu werden braucht. Bei diesem Verfahren wird die im Empfänger empfangene, mit den Symbolen 1 bis 6 modulierte Trägerwelle zunächst mit einem im Empfänger z.B. von einem Sinusgenerator erzeugten Sinussignal mit im wesentlichen gleicher Frequenz — der Sinusgenerator muss dazu laufend seine Frequenz den Frequenzsprüngen der Trägerwelle anpassen —, jedoch beliebiger Phasenlage sowie mit einem zu diesem korrespondierenden Kosinussignal multipliziert. Aus den resultierenden Produktsignalen werden die Frequenzenanteile beispielsweise durch Integration weggefiltert, so dass jeweils für die Uebertragungsdauer der einzelnen Symbole 1 bis 6 weitgehend konstante Anteile übrig bleiben. Diese lassen sich als die imaginären und die reellen Komponenten von ersten Zeigern in der komplexen gauss'schen Ebenen $jy$—$x$ auffassen, wie dies in Fig. 2a) dargestellt ist. In Fig. 2a) sollen beispielsweise der Zeiger $Z_1$ mit seinen Komponenten $x_1$ und $y_1$ dem Symbol 1, der Zeiger $Z_2$ mit den Komponenten $x_2$ und $y_2$ dem Symbol 2 und der Zeiger $Z_3$ mit den Komponenten $x_3$ und $y_3$ dem Symbol 3 des Uebertragungsabschnitts I von Fig. 1 entsprechen. Zusätzlich eingezeichnet und mit $\varphi_1$ bis $\varphi_3$ bezeichnet sind in Fig. 2 a) die Phasenwinkel, welche die genannten Zeiger $Z_1$ bis $Z_3$ mit der positiven reellen Achse x einschliessen, welche der Phasenlage des im Empfänger erzeugtes Sinussignals entspricht. Diese Phasenwinkel $\varphi_1$ bis $\varphi_3$ sind ein Teil der n möglichen Werte der gesuchten Blockphase des Uebertragungsabschnitts I. Im Beispiel von Fig. 2 a) wurde angenommen, dass n gleich 4 sei, da die Zeiger $Z_1$ und $Z_3$ einserseits und $Z_2$ und $Z_3$ andererseits gegenseitig den Phasenwinkel von etwa $\pi/2$ einschliessen und ein solcher relativer Phasenwinkel von zwei Zeigern erst ab n = 4, d.h. erst ab der Verwendung des QPSK-Verfahrens auftritt. Im folgenden soll davon ausgegangen werden, dass n tatsächlich = 4 ist.

Unter idealen Verhältnissen müssten die Zeiger $Z_1$ bis $Z_3$ in Fig. 2 a) alle die geliche Länge sowie exakt Winkel $\pi/2$ bzw. $\pi$ gegeneinander aufweisen. Bedingt durch das Rauschen sowie durch Störungen im Uebetragungskanal weichen jedoch in der Praxis sowohl die Längen der Zeiger voneinander als auch ihre relativen Phasenwinkel von den genannten Werten $\pi/2$ und $\pi$ ab, was in Fig. 2 a) auch dargestellt ist. Um den Einfluss des Rauschens sowie von Störungen bei der Bestimmung der Blockphase möglichst zu minimieren, empfiehlt es sich, die Blockphase durch Mittelung über mehrere, vorzugsweise sogar sämtliche innerhalb des jeweiligen Uebertragungsabschnitts übertragenen Symoble, hier über die Symbole 1 bis 3, zu bestimmen. Dazu werden die Zeiger $Z_1$ bis $Z_3$ in Zeiger $Z_1'$ bis $Z_3'$ transformiert, welche mit der reellen Achse einen allgemein n-fach, im Beispielsfall von Fig. 2 mit n = 4, einen 4-fach grösseren Winkel einschliessen. Die sich aus den Zeigern $Z_1$ bis $Z_3$ ergebenden Zeiger $Z_1'$ bis $Z_3'$ sind in Fig. 2 b) wiederum in der gauss'schen Ebene dargestellt. Wie zu erkennen ist, fallen alle Zeiger $Z_1'$ bis $Z_3'$ so zusammen, dass über ihre reellen und imaginären Komponenten $x_1'$ bis $x_3'$ bzw. $y_1'$ bis $y_3'$ jeweils gemittelt werden kann. Durch Bildung der Arkustangensfunktion aus dem Verhältnis des Mittelwerts $\bar{y}$ der imaginären Komponenten $y_1'$ bis $y_3'$ zum Mittelwert $\bar{x}$ der reellen Komponenten $x_1'$ bis $x_3'$ lässt sich dann die gewünschte mittlere Phase 1/n (arctg $(\bar{y}/\bar{x})$) relativ zur Phasenlage des Sinussignals bis auf die erwähnte noch verbleibende Phasenunsicherheit bestimmen. Im Beispielsfall mit n = 4 bedeutet diese Phasenunsicherheit, dass die wahre Blockphase des Uebertragungsabschnitts anstatt, wie aus Fig. 2 b) zu entnehmen, 0,18 $\pi$ auch 0,68 $\pi$, 1,18 $\pi$ oder 1,68 $\pi$ betragen könnte.

Für die weiteren Ausführungen wird nun davon ausgegangen, dass für sämtliche Uebertragungsabschnitte I bis IV mit dem vorstehend erläuterten Schätzverfahren die zugehörigen Blockphasen bis auf die jeweils n-fache Phasenunsicherheit bestimmt wurden. Durch Aswertung der durch die Mehrfachübertragung der Symbole 1 bis 6 gewonnenen Synchronisationsinformation lassen sich die endgültigen Blockphasen der Uebertragungsabschnitte I bis IV gewinnen. Zunächst müssen dazu innerhalb der einzelnen Uebertragungsabschnitte die n möglichen Zustände der einzelnen Symbole unter Verwendung der noch unsicheren Blockphasen bestimmt werden, wobei den einzelnen Zuständen als Werte komplexe Zahlen aus der Menge [exp(j0), exp(j2$\pi$/n), . . . . , exp(j(n-1)2$\pi$/n)] zugewiesen werden. Sodann wird für jeweils zwei korrespondierende Symbole aus unterschiedlichen, im folgenden mit den Indizes i und k gekennzeichneten Uebertragungsabschnitten der Zustandswert des Symbols aus dem Uebertragungsabschnitt mit dem Index i mit dem konjugiert komplexen Zustandswert des Symbols aus dem Uebertragungsabschnitt mit dem Index k multipliziert und die Produkte $d_{ik}$ jeweils mit Produkten $a_i a_k^*$ gleichgesetzt, wobei $a_i$ einen zunächst unbekannten komplexen, dem Uebertragungsabschnitt mit dem Index i zugeordneten Phasen-

3

fehlerwert und $a_k^*$ den konjugiert komplexen Wert eines ebenfalls noch unbekannten komplexen, dem Uebertragungsabscnitt mit dem Index k zugeordneten Phasenfehlerwert $a_k$ bedeutet.

Im Beispiel von Fig. 1 würde daraus folgendes Gleichungssystem resultieren, wobei $d_{1I}^*$ den Zustandswert des Symbols 1 im Uebertragungsabschnitt I, $b_{1II}^*$ den konjugiert komplexen Zustandswert des Symbols 1 Uebertragungsabschnitt II usw. bedeutet:

$$b_{1I} \cdot b_{1II}^* = d_{I\ II} = a_I \cdot a_{II}^*$$

$$b_{2II} \cdot b_{2III}^* = d_{I\ III} = a_I \cdot a_{III}^*$$

$$b_{3I} \cdot b_{3IV}^* = d_{I\ IV} = a_I \cdot a_{IV}^*$$

$$b_{4II} \cdot b_{4III}^* = d_{II\ III} = a_{II} \cdot a_{III}^*$$

$$b_{5II} \cdot b_{5IV}^* = d_{II\ IV} = a_{II} \cdot a_{IV}^*$$

$$b_{6III} \cdot b_{6IV}^* = d_{III\ IV} = a_{III} \cdot a_{IV}^*$$

Aus mindestens einer der Anzahl der vorgegebenen Uebertragungsabschnitte gleichen Anzahl von Gleichungen des Gleichungssystems können die unbekannten Phasenfehlerwerte ermittelt werden. Im Beispielsfalle stehen für die vier unbekannten Phasenfehlerwerte $a_I$ bis $a_{IV}$ insgesamt sechs Gleichungen zur Verfügung, d.h. dass das als Beispiel gewählte Gleichungssystem überbestimmt ist. Diese Ueberbestimmung ergibt sich dadurch, dass im Beispiel von Fig. 1 jedes Symbol doppelt übertragen wurde. Wie bereits erwähnt, ist es an sich ausrechend jeweils nur ein Symbol aus jedem Uebertragungsabschnitt in einem anderen Uebertragungsabschnitt zusätzlich zu übertragen. Es würde daraus ein einfach bestimmtes Gleichungssystem resultieren. Ein überbestimmtes Gleichungssystem, wie das obige, liefert jedoch eine gewisse Redundanz für die Bestimmung der unbekannten Phasenfehlerwerte, welche besonders im Hinblick auf Uebertragungsfehler von grossem Vorteil sein kann.

Die Phasenfehlerwerte, im Beispielsfalle die Phasenfehlerwerte, $a_I$ bis $a_{IV}$, werden nach ihrer Bestimmung zur Korrektur der Blockphasen verwendet, und zwar werden die vorläufig innerhalb der einzelnen Uebertragungsabschnitte bestimmten Blockphasen jeweils um einen, jeweils dem negativen Argument des dem jeweiligen Uebertragungsabschnitt zugeordneten Phasenfehlerwertes entsprechenden Phasenwinkel korrigiert.

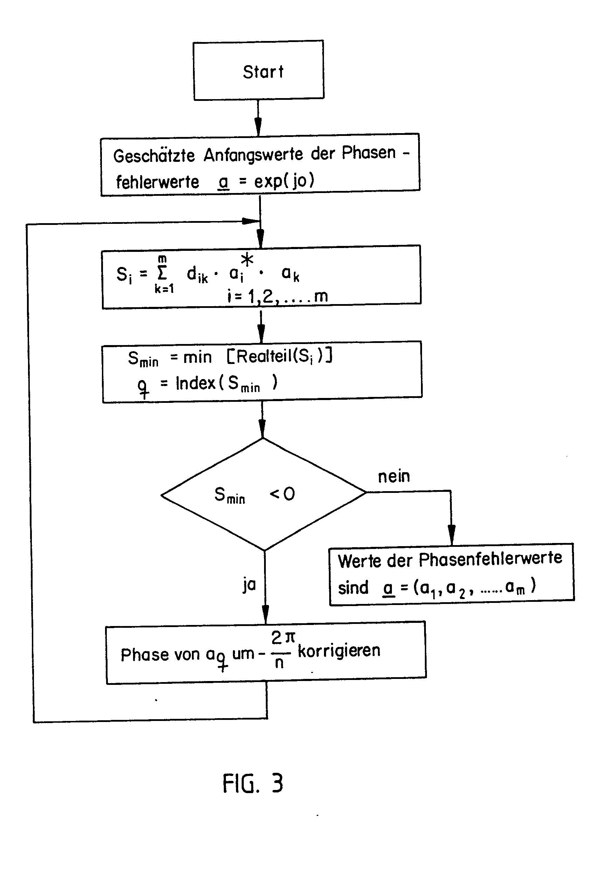

Aus Gleichungssystemen, wie dem als Beispiel angeführten, die aus der Doppelübertragung sämtlicher Symbole resultieren, lassen sich die unbekannten Phasenfehlerwerte auf folgende, auch im Flussdiagramm von Fig. 3 dargestellte Weise besonders elegant ermitteln: Allen Phasenfehlerwerten wird als Anfangswert $\exp(j0)$ zugewiesen. Sodann wird eine der vorgegebenen Anzahl von Uebertragungsabschnitten entsprechende Anzahl m von Summen

$$S_i = \sum_{k=1}^{m} d_{ik}\ a_i^*\ a_k$$

gebildet, wobei die $d_{ik}$, $a_i$, $a_k$ wieder die bereits vorstehend definierte Bedeutung haben und der Stern wieder das konjugiert Komplexe anzeigen soll. Von den gebildeten Summen wird diejenige mit dem kleinsten Realteil sowie ihr Index i bestimmt. Sofern dieser Realteil positiv ist, werden die aktuellen Phasenfehlerwerte als deren zu ermittelnde Endwerte aufgefasst; anderenfalls wird das Argument des Phasenfehlerwerts $a_i$ und $-2\pi/n$ korrigiert und erneut die Summenbildungen, die Indexbestimmung sowie die Vorzeichenbestimmung durchgeführt, d.h. es wird eine Schleife durchlaufen. Diese Verfahrensschritte lassen sich am einfachsten mittels eines Digitalrechners ausführen.

**Patentansprüche**

1. Vefahren zur Uebertragung digitaler Daten in Form von Symbolen, bei welchem

a) die Phase einer Trägerwelle im Sender zur Bildung der Symbole (1—6) entsprechend den digitalen Daten um Phasenwinkel aus der Menge $[0, 2\pi/n, \ldots, (n-1)2\pi/n]$ mit n Elementen moduliert wird,

b) die Symbole auf mehrere, jeweils mehrere Symbole (1—6) enthaltende Uebertragungsabschnitte (I—IV) verteilt werden, und

c) die Frequenz zu Beginn oder am Ende jedes Uebertragungsabschnitts (I—IV) sprunghaft verändert wird, dadurch gekennzeichnet, dass

d) von Sender als Synchronisationsinformation für den Empfänger zur Synchronisierung der Uebertragungsabschnitte (I—IV) mindestens ein den digitalen Daten entsprechendes Symbol aus jedem Uebertragungsabschnitt in einem anderen Uebertragungsabschnitt zusätzlich übertragen wird,

e) dass im Empfänger die Phasen der Trägerwelle innerhalb der einzelnen Uebetragungsabschnitte (I—IV), im folgenden mit Blockphasen bezeichnet, zunächst bis auf eine n-fache Phasenunsicherheit unabhängig voneinander mittels eines Schätzverfahrens direkt aus Abschnitten der Trägerwellen bestimmt werden, welche mit den jeweiligen Daten moduliert sind, und dass

f) die endgültigen Blockphasen durch Auswertung der genannten Synchronisationsinformation gewonnen werden.

2. Verfahren nach Anspruch 1, dadurch gekennzeichnet, dass das Schätzverfahren folgende Verfahrensschritte aufweist:

— die empfangene, mit den jeweiligen Daten modulierte Trägerwelle wird mit einem im Empfänger erzeugten Sinussignal mit im wesentlichen gleicher Frequenz ($f_I$—$f_{IV}$), jedoch beliebiger Phasenlage relativ zur Trägerwelle und einem zu diesem korrespondierenden Kosinussignal multipliziert;

— aus beiden resultierenden Produktisgnalen werden die frequenten Anteile weggefiltert;

— die übrigleibenden, für die Dauer der einzelnen übertragenen Symbole (1—6) weitgehend konstanten Anteile werden während dieser Dauer jeweils als die imaginäre ($y_1$—$y_3$) und die reelle ($x_1$—$x_3$) Komponente eines ersten Zeigers ($Z_1$—$Z_3$) in der komplexen gauss'schen Ebene (x—jy) aufgefasst und in die Komponenten eines zweiten Zeigers ($Z_1'$ bis $Z_3'$) transformiert, welcher mit der reellen Aschse (x) einen n-fach grösseren Winkel einschliesst als der erste Zeiger ($Z_1$—$Z_3$);

— aus den transformierten Komponenten ($x_1'$—$x_3'$, $y_1'$—$y_3'$) mehrerer Symbole wird separat für die reellen Werte ($x_1'$—$x_3'$) un die imaginären Werte ($y_1'$—$y_3'$) jeweils ein Mittelwert ($\bar{x}$, $\bar{y}$) gebildet;

— aus dem Verhältnis der Mittelwerte ($\bar{x}$, $\bar{y}$) wird über die Bildung der Arkustangensfunktion und anschliessende Division duch den den Wert n die Blockphase bis auf die n-fache Phasenunschierheit relativ zur Phasenlage des Sinussignals bestimmt.

3. Verfahren nach Anspruch 1, dadurch gekennzeichnet, dass die Auswertung der Synchronisationsinformation zur Ermittlung der endgültigen Blockphasen in folgenden Schritten durchgeführt wird:

— innerhalb der einzelnen Uebertragungsabschnitt (I—IV) werden die n möglichen Zustände der darin übertragenen Sybole unter Verwendung der noch unsicheren Blockphasen bestimmt, wobei den einzelnen Zuständen als Werte komplexe Zahlen aus der Menge [exp(j0), exp(j2π/n), . . . , exp(j(n-1)2π/n)] zugewiesen werden;

— für jeweils zwei korrespondierende Symbole aus unterschiedlichen, im folgenden mit den Indizes i und k gekennzeichneten Uebertragungsabschnitten, wird der Zustandswert des Symbols aus dem Uebertragungsabschnitt mit dem Index i mit dem konjugiert komplexen Zustandswert des Symbols aus dem Uebertragungsabschnitt mit dem Index k multipliziert und die Produkte $d_{ik}$ jeweils mit Produkten $a_i \cdot a_k^*$ gleichgesez, wobei $a_i$ einen zunächst noch unbekannten, komplexen, dem Uebetragungsabschnitt mit dem Index i zugeordneten Phasenfehlerwert und $a_k^*$ den konjugiert komplexen Wert eines ebenfalls noch unbekannten komlexen, dem Uebetragungsabschnitt mit dem Index k zugeordneten Phasenfehlerwerts $a_k$ bedeutet;

— aus mindestens einer der Anzhal der vorgegebenen Uebertragungsabschnitte gleichen Anzahl solcher Gleichsetzungen werden die Phasenfehlerwerte ermittelt;

— die vorläufig innerhalb der einzelnen Uebertragungsabschnitte bestimmten Blockphasen werden jeweils um einen, jeweils dem negativen Argument des dem jeweiligen Uebertragungsabschnitt zugeordneten Phasenfehlerwerts entsprechenden Phasenwinkel korrigiert.

4. Verfahren nach Anspruch 1, dadurch gekennzeichnet, dass jedes Symbol (1—6) in einem anderen Uebertragungsabschnitt (I—IV) zusätzlich übertragen wird.

5. Verfahren nach Anspruch 4, dadurch gekennzeichnet, dass niemals zwei Symbole (1—6) aus einem Uebertragungsabschnitt (I—IV) in einem einzigen anderen Uebertragungsabschnitt (I—IV) zusätzlich übertragen werden.

6. Verfahren nach dem Ansprüchen 3, 4 und 5, dadurch gekennzeichnet, dass die Phasenfehlerwerte auf folgende Weise ermittelt werden:

— allen Phasenfehlerwerten wird als Anfangswert exp(j0) zugewiesen;

— es wird eine der vorgegebenen Anzahl von Uebertragungsabschnitten (I—IV) entsprechende Anzahl m von Summen

$$S_i = \sum_{k=1}^{m} d_{ik}\ a_i^*\ a_k$$

gebildet, wobei $a_i^*$ der konjugiert komplexe Wert won $a_i$ ist;

— es wird die Summe mit dem kleinsten Realteil sowie ihr Index i bestimmt;

— sofern dieser kleinste Realteil positiv ist, werden die aktuellen Phasenfehlerwerte als deren zu ermittelnde Endwerte aufgefasst; andernfalls wird das Argument des Phasenfehlerwerts $a_i$ um −2π/n korrigiert und erneut die Summenbildungen, die Indexbestimmung sowie die Vorzeichenbestimmung durchgefühhrt.

# EP 0 208 872 B1

**Revendications**

1. Procédé pour la transmission de données numériques sous la forme de symboles, dans lequel
   a) la phase d'une onde porteuse est modulée dans l'émetteur avec n éléments d'angles de phase de l'ensemble [0, 2π/n, . . . , (n-1)2π/n] selon les données numériques pour former les symboles (1 à 6);
   b) les symboles sont répartis entre plusieurs salves de transmission (I à IV) contenant chacune plusieurs symboles (1 à 6); et
   c) la fréquence au début ou à la fin de chaque salve de transmission (I à IV) est changée brusquement, caractérisé
   d) en ce que, comme information de synchronisation pour le récepteur pour la synchronisation des salves de transmission (I à IV), au moins un symbole correspondant aux données numériques provenant de chaque salve de transmission est transmis en plus par l'émetteur dans une autre salve de transmission,
   e) en ce que, dans le récepteur, les phases de l'onde porteuse, dans le différentes salves de transmission (I à IV), appelées "phases de bloc" dans ce qui suit, sont d'abord déterminées indépendamment les unes des autres à une n-ième incertitude de phase près au moyen d'un procédé d'estimation, directement à partir de parties des ondes porteuses qui sont modulées avec les données correspondantes, et
   f) en ce que les phases de bloc définitives sont obtenues par utilisation de ladite information de synchronisation.

2. Procédé selon la revendication 1, caractérisé en ce que le procédé d'estimation comprend les étapes siuvantes:
   — l'onde porteuse reçue modulée avec les données correspondantes est multipliée avec un signal sinus produit dans le récepteur avec sensiblement la même fréquence ($f_I$ à $f_{IV}$) et une phase quelconque par rapport à l'onde porteuse, et avec un signal cosinus correspondant à ce signal;
   — les composantes fréquentes sont éliminées des deux signaux "produit" résultants par filtrage;
   — les composantes restantes, sensiblement constantes pendant la durée des différents symboles transmis (1 à 6), sont considérés chaque fois pendant cette durée comme la composante imaginaire ($y_1$, à $y_3$) et la composante réelle ($x_1$ à $y_3$) d'un premier vecteur de Fresnel ($Z_1$ à $Z_3$) dans le plan guassien complexe ($x$—$jy$) et sont transformées en les composantes d'un deuxième vecteur des Fresnel ($Z'_1$ à $Z'_3$ qui forme avec l'axe réel ($x$) un angle n fois plus grand que l'angle formé avec le premier vecteur de Fresnel ($Z_1$ à $Z_3$);
   — à partir des composantes transformées ($x'_1$ à $x'_3$, $y'_1$ à $y'_3$) de plusieurs symboles, une valeur moyenne ($x, y$) est formée séparément pour les valeurs réelles ($x'_1$ à $x'_3$ et les valeurs imaginaires ($y'_1$ à $x'_3$) et les valeurs imaginaires ($y'_1$ à $y'_3$);
   — à partir du rapport des valeurs moyennes ($\bar{x}, \bar{y}$), la phase de bloc est déterminée par rapport à la phase du signal sinus à la n-ième incertitude de phase près par formation de la fonction arc tangente, puis division par la valeur de n.

3. Procédé selon la revendication 1, caractérisé en ce que l'utilisation de l'information de synchronisation pour obtenir les phases de bloc définitives est effectuée selon les étapes suivantes:
   — dans les différentes salves de transmission (I—IV), les n états possible des symboles transmis dans cellesci sont déterminés en utilisant les phases de blocs encore incertaines, les différents état représentés par des valeurs de nombres complexes de l'ensemble [exp(j0), exp(j2α/n), . . . , [exp(j(n-1)2π/n)];
   — pour deux symboles correspondants provenant à chaque fois de salves de transmission différentes désignées par les indices i et k dans ce que suit, la valeur d'état du symbole provenant de la salve de transmission ayant l'indice i est multipliée par la valeur d'état complexe conjuguée du symbole provenant de la salve de transmission ayant l'indice k, et le produit $d_{ik}$ est égalé chaque fois aux produits $a_i \times a_k^*$, $a_i$ désignant une valeur complexe d'erreur de phase encore inconnue associée à la salve de la transmission ayant l'indice i, et $a_k^*$ désignant la valeur complexe conjuguée d'une valeur d'erreur de phase encore inconnue $a_k$ associée à la salve de transmission ayant l'indice k;
   — les valeurs d'erreur de phase sont obtenues à partir d'u moins un nombre de telles égalités équivalent au nombre des salves de transmission données,
   — les phases de bloc déterminées provisoirement dans les différentes salves de transmission sont corrigées d'un angle de phase correspondant à l'argument négatif de la valeur d'ereur de phase associée à la salve de transmission correspondante.

4. Procédé selon la revendication 1, charactérisé en ce que chaque symbole (1 à 6) est transmis en plus dans une autre salve transmission (I à IV).

5. Procédé selon la revendication 4, caractérisé en ce que jamais deux symboles (1 à 6) d'une salve de transmission (I à IV) sont transmis en plus dans une seule autre salve de transmission (I à IV).

6. Proédé selon les revendications 3, 4 et 5, caractérisé en ce que les valeurs d'erreur de phase sont obtenues de la manière suivante:
   — à toutes les valeurs d'erreur de phase est affectée comme valeur initiale la valeur exp(j0);

— on forme un nombre m de sommes $S_i$ correspondant au nombre donné de salves de transmission (I à IV):

$$S_i = \sum_{k=1}^{m} d_{ik} \, a_i^* \, a_k$$

où $a_i^*$ est la valeur complexe conjugée de $a_i$;

— on calcule la somme qui a la plus petite partie réelle, ainsi que son indice i;

— si cette plus petite partie réelle est positive, les valeurs d'erreur de phase actuelles sont considérées comme les valeurs de phase finales à obtenir; dans le cas contraire, l'argument de la valeur d'erreur de phase $a_i$ est corrigé de $-2\pi/n$, et la formation des sommes, la détermination de l'indice, ainsi que la détermination du signe sont effectuées de nouveau.

**Claims**

1. Method for transmitting digital data in the form of symbols, in which

a) the phase of a carrier wave is modulated by phase angles from the set [0, 2π/n, . . . , (n-1)2π/n] with n elements in the transmitter for forming the symbols (1—6) corresponding to the digital data,

b) the symbols are distributed to several transmission sections (I—IV) which in each case contain several symbols (1—6) and

c) the frequency is suddenly changed at the beginning or at the end of each transmission section (I—IV), characterized in that

d) the transmitter additionally transmits at least one symbol corresponding to the digital data from each transmission section in another transmission section as synchronization information for the receiver for synchronizing the transmission sections (I—IV),

e) in that in the receiver the phases of the carrier waves are determined within the individual transmission sections (I—IV), called block phases in the text which follows, initially up to a phase uncertainty of n-times, independently of each other by means of an estimating method directly from sections of the carrier waves which are modulated with the respective data and in that

e) (sic) the final block phases are obtained by evaluation of the said synchronization information.

2. Method according to Claim 1, characterized in that the estimating method has the following method steps:

— the received carrier wave modulated with the respective data is multiplied by a sinuoidal signal generated in the receiver and having essentially the same frequency ($f_I$—$f_{IV}$) but an arbitrary phase relationship relative to the carrier wave and by a cosine signal corresponding to the latter;

— the frequency components are filtered out of both of the resultant product singals;

— the remaining components, which are largely constant for the duration of the individual symbols (1—6) transmitted, are in each case in the course of this duration interpreted as the imaginary ($y_1$—$y_3$) and the real ($x_1$—$x_3$) component of a first vector ($Z_1$—$Z_3$) in the complex Gaussian plane (x—jy) and transformed into the components of a second vector ($Z_1'$ to $Z_3'$) which encloses a greater angle by n-times with the real axis (x) than the first vector ($Z_1$—$Z_3$);

— from the transformed components ($x_1'$—$x_3'$, $y_1'$—$y_3'$) of several symbols, a mean value $\bar{x}$, $\bar{y}$ is separately formed in each case for the real values ($x_1'$—$x_3'$) and the imaginary values ($y_1'$—$y_3'$);

— from the ratio of the mean values ($\bar{x}$, $\bar{y}$) the block phase up to the phase uncertainty of n-times is determined relative to the phase relationship of the sinusoidal signal from the ratio of the mean values ($\bar{x}$, $\bar{y}$) via the formation of the arc-tangent function and subsequent division of the value n.

3. Method according to Claim 1, characterized in that the evaluation of the synchronization information for determining the final block phases is carried out in the following steps:

— within the individual transmission sections (I—IV), the n possible states of the symbols transmitted in them are determined by using the still uncertain block phases, complex numbers from the set [exp(j0), exp(J2π/n), . . . , exp(jn-1)2π/n)] being allocated as values to the individual states;

— for in each case two corresponding symbols from different transmission sections, identified by indices i and k in the text following, that state value of the symbol from the transmission section having the index i is multiplied by the conjugate complex state value of the symbol from the transmission section having the index k and the products $d_{ik}$ are in each case equated with products $a_i \cdot a_k^*$, $a_i$ being an initially still unknown complex phase error value allocated to the transmission section having the index i and $a_k^*$ being the conjugate complex value of an also still unknown complex phase error value $a_k$ allocated to the transmission section having the index k;

— the phase error values are determined from at least a number equal to the number of the predetermined transmission sections of such equations;

— the block phases preliminarily determined within the individual transmission sections are in each case corrected by a phase angle which in each case corresponds to the negative argument of the phase error value allocated to the negative transmission section.

4. Method according to Claim 1, characterized in that each symbol (1—6) is additionally transmitted in

7

another transmission section (I—IV).

5. Method according to Claim 4, characterized in that at no time two symbols (1—6) from one transmission section (I—IV) are additionally transmitted in a single other transmission section (I—IV).

6. Method according to Claims 3, 4 and 5, characterized in that the phase error values are determined in the following manner;

— all phase error values are allocated exp(j0) as initial value;

— a number m, corresponding to the pre-determined number of transmission sections (I—IV) of sums

$$S_i = \sum_{k=1}^{m} d_{ik} \, a_i^* \, a_k$$

is formed, $a_i^*$ being the conjugate complex value of $a_i$;

— the sum with the smallest real component and its index i is determined;

— if this smallest real component is positive, the current phase error values are interpreted as being their final values to be determined; otherwise, the argument of the phase error value $a_i$ is corrected by $-2\pi/n$ and the summations, the index determination and the sign determination are again carried out.

FIG. 1

FIG. 2

Start

Geschätzte Anfangswerte der Phasen - fehlerwerte  $\underline{a}$ = exp( jo)

$$S_i = \sum_{k=1}^{m} d_{ik} \cdot a_i^* \cdot a_k$$
$$i = 1, 2, \ldots . m$$

$$S_{min} = min \; [Realteil(S_i)]$$
$$q = Index ( S_{min} )$$

$S_{min} < 0$

nein

ja

Werte der Phasenfehlerwerte sind  $\underline{a} = (a_1, a_2, \ldots . a_m )$

Phase von $a_q$ um $-\dfrac{2\pi}{n}$ korrigieren

FIG. 3